# EUROPÄISCHE PATENTSCHRIFT

(11) **EP 1 162 385 B1**
(45) Veröffentlichungstag und Bekanntmachung des Hinweises auf die Patenterteilung: **06.02.2008**
(21) Anmeldenummer: 01112332.0
(22) Anmeldetag: 19.05.2001
(51) Int. Cl.: F16D 65/847, B60B 3/16, F16D 65/12

(54) **Radnabenflansch und Radnabe mit einem solchen**
Wheel hub flange and wheel hub provided with such a flange
Bride de moyeu de roue et moyeu de roue pourvu d'une telle bride

(30) Priorität: 08.06.2000 DE 10027942
(43) Veröffentlichungstag der Anmeldung: 12.12.2001
(73) Patentinhaber: SAF-HOLLAND GmbH, 63856 Bessenbach-Keilberg (DE)
(72) Erfinder: Koschinat, B. Hubert, 63768 Hösbach (DE)
(74) Vertreter: KEIL & SCHAAFHAUSEN Patentanwälte

(56) Entgegenhaltungen:
- EP-A- 0 865 941
- DE-A- 3 025 731
- DE-A- 3 025 757
- DE-A- 4 114 776
- DE-A- 19 600 656
- DE-A- 19 647 391
- DE-C- 3 942 651
- DE-U- 29 915 636
- US-A- 3 348 884
- US-A- 3 952 820
- US-A- 5 096 264
- US-A- 5 921 633

## Beschreibung

Die Erfindung betrifft einen Radnabenflansch mit einer Radbefestigung zum Anschluss eines eine RadRadfelge und eine Radschüssel aufweisenden Rades im Bereich des äußeren Flanschrandes und mit einer Flanschbefestigung zum Anschluss an eine Radnabe, wobei der Radnabenflansch einen größeren Durchmesser aufweist als die Radnabe. Ferner bezieht sich die Erfindung auf eine Radnabe mit einem solchen Radnabenflansch.

Der zur Verfügung stehende Freiraum unter einer RadRadfelge wird unabhängig von der Bremsenart (Trommel- oder Scheibenbremsen) für die Dimensionierung der Radbremse genutzt. Aufgrund erhöhter Sicherheitsreserven bei Scheibenbremsen modernerer Bauart insbesondere im Hochtemperaturbereich ist die volle Nutzung des Freiraums unter einer Radfelge für 22,5-Zoll-Bereifung nicht zwingend erforderlich, da ohne Sicherheitseinbußen auf eine kleinere Scheibenbremsengröße zurückgegriffen werden kann, über die auch eine Radfelge für 19,5-Zoll-Bereifung passt.

Es ist bekannt, zur Kühlung der Bremse durch Luftzirkulation in der Radschüssel zwischen der Radbefestigung und der Radfelge Belüftungslöcher zu dem Freiraum unter der RadRadfelge vorzusehen. Eine derartige Kühlung der Bremsen ist notwendig, da hohe Temperaturen insbesondere am inneren Radfelgenhorn den Reifen im Wulstbereich thermisch vorschädigen können.

Außerdem ist der Verschleiß der Bremsbeläge bei höheren Temperaturen größer als bei niedrigeren.

Bei 19,5-Zoll-Rädern mit der hierfür üblichen Radbefestigung auf einem Teilkreis von 275 mm können problemlos in dem weniger stark abgeschrägten Bereich der Radschüssel großzügig dimensionierte Belüftungslöscher eingebracht werden, da der Abstand zwischen Radfelgendurchmesser und dem kleineren Teilkreis für die Radbefestigung ausreichend groß ist. Belüftungsprobleme sind daher bei dieser Kombination gering.

Bei 19,5-Zoll-Rädern mit einer Radbefestigung auf einem Teilkreis, wie für 22-Zoll-Räder üblich, von 335 mm ist es jedoch aufgrund Platzmangels nur schlecht möglich, derartige Belüftungslöcher in der Radschüssel unterzubringen. Bei einem solchen Teilkreis können in dem stark abgeschrägten Bereich der Radschüssel nur noch vergleichsweise kleine und wegen deren Schräglage zusätzlich wenig wirksame Entlüftungslöcher vorgesehen werden. Bei Kombinationen mit geringem Radfelgendurchmesser und großem Teilkreis für die Radbefestigung, also bei verhältnismäßig geringem radialen Abstand dieser beiden, können daher Belüftungsprobleme auftreten.

Ein Radnabenflansch der eingangs genannten Art ist aus der US 5,921,633 bekannt, bei welcher zwischen der Radbefestigung und einer Bremsscheibe fünf über den Umfang verteilte Durchgangsöffnungen ausgebildet sind. Auch aus der US 3,952,820 ist eine Radnabenanordnung mit Durchgangsöffnungen, die der Belüftung dienen, bekannt. DE-A-196 47 391 zeigt ein Radnabenflansch gemäß dem Oberbegriff des Anspruchs 1.

Daher ist es Aufgabe der vorliegenden Erfindung, eine verbesserte Belüfung der Bremsen unabhängig von der Radfelgengröße und dem Durchmesser des Teilkreises, insbesondere bei einem Standard-Teilkreisdurchmesser für die Radbefestigung von 335 mm vorzusehen.

Diese Aufgabe wird bei einem Radnabenflansch der eingangs genannten Art im Wesentlichen dadurch gelöst, dass zwischen der Radbefestigung und der Flanschbefestigung wenigstens zwölf Belüftungsdurchlässe ausgebildet sind.

Obwohl es sich bei den Radnabenflanschen im Bereich der Radbefestigung um besonders beanspruchte Teile handelt, hat sich überraschend herausgestellt, dass bei Einhaltung hinreichender Stabilität des Radnabenflansches in diesen selbst Belüftungsdurchlässe ausgebildet werden können, durch welche auch bei geringem Abstand zwischen Radbefestigung und RadRadfelge eine hinreichende Menge an Kühlluft unter die Radfelge strömen und die Bremswärme wirksam abgeführt werden kann. Durch die Anordnung der Belüftungsdurchlässe in dem Bereich zwischen Radbefestigung und Flanschbefestigung kann die Kühlluft besser einströmen als durch in dem bereits abgeschrägten Bereich der Radschüssel angeordnete Belüftungslöcher, die teilweise von dem äußeren Radfelgenhorn der Radfelge abgedeckt werden. Aufgrund der erfindungsgemäßen Lösung wird eine wesentlich verbesserte Wärmeabführung von der Bremse erreicht. Zudem kann z.B. auch für die kleineren 19,5-Zoll-Räder ein Radanschluss mit einem größeren Teilkreis für die Radbefestigung, insbesondere 335 mm, verwendet werden, so dass die dazugehörigen Radnabenflansche für unterschiedliche Bremsen universell für 19,5-Zoll und 22,5-Zoll-Räder (Radfelgen) einsetzbar sind. Dadurch lassen sich die Fertigungskosten und Teilevielfalt reduzieren.

Derartige Belüftungsdurchlässe, Öffnungen oder Unterbrechungen im Bereich des Radnabenflansches vereinfachen auch das Gussverfahren zu dessen Herstellen, da der Formsand zur Erstellung der Gussform besser eingestrahlt werden kann.

Die Kühlwirkung auf die Bremse kann zusätzlich dadurch verstärkt werden, dass auch die Radschüssel Belüftungslöcher aufweist.

Zur weiteren Verbesserung der Kühlwirkung und Materialersparnis verbleiben gemäß einer bevorzugten Ausführungsform zwischen den Belüftungsdurchlässen lediglich speichenförmige Verbindungsstege.

Diese Verbindungsstege können erfindungsgemäß schräg und/oder bogenförmig ausgebildet sein, um einen Ventilatoreffekt zu erzielen.

Dabei können die Verbindungsstege für einen optimalen Ventilatoreffekt an ihrem äußeren Rand schräg in Laufrichtung des Rades aufweisen.

Gemäß einer anderen Ausführungsform des erfundenen Radnabenflansches können die Belüftungsdurchlässe aber auch als radiale oder in Umfangsrichtung des äußeren Flanschrandes liegende Langlöcher oder dgl. Öffnungen ausgebildet sein.

Um eine gleichmäßige Kühlwirkung zu erreichen, sind die Belüftungsdurchlässe gemäß einer weiteren Ausgestaltung des Erfindungsgedankens gleichmäßig auf der Oberfläche des Radnabenflansches verteilt, bspw. auf einem oder mehreren Teilkreisen.

Gemäß einer speziellen Ausführungsform des Radnabenflansches sind die Radbefestigung und die Flanschbefestigung in verschiedenen Ebenen angeordnet und über einen schrägen Verbindungsabschnitt miteinander verbunden. Die Belüftungsdurchlässe befinden sich in diesem Fall in dem Verbindungsabschnitt. Insbesondere wenn die Radbefestigung nach axial außen gegenüber der Flanschbefestigung vorsteht, ist ein besonders einfacher Anschluss des Rades an dem Radnabenflansch möglich.

Zur weiteren Gewichtsersparnis und Vereinfachung des Gussverfahrens können im äußeren Flanschrand z. B. im Bereich der ggf. vorgesehenen Durchgangsöffnungen für Radbolzen der Radbefestigung, zusätzliche Belüftungslöcher, bspw. radial angeordnete Langlöcher, oder Unterbrechungen vorgesehen sein.

Zur Befestigung des Rades können vorzugsweise Durchgangsöffnungen für die Aufnahme von Radbolzen dienen.

Als Verdrehsicherung der Radbolzen kann dessen Bolzenkopf dabei vorzugsweise eine einseitige Abflachung haben, welche sich an einem den Flanschrand verbreiternden Kragen abstützt. Die Verbreiterung des Flanschrandes verbessert außerdem die Steifheit.

Dann ist es möglich, dass die Durchgangsöffnungen für die Radbolzen auf der gegenüberliegenden Seite einen sich zumindest zu einer Seite hin aufweitenden abgerundeten oder abgeschrägten Rand aufweisen. Aufgrund der Abrundung bzw. Abschrägung der scharfkantigen Ecken der Durchgangsöffnungen werden ohne Beeinträchtigung der Steifigkeit des Flanschrandes "technische Kerben" vermieden, welche hinsichtlich der Betriebsfestigkeit problematisch sind.

In einer bevorzugten Ausführungsform ist mit der Flanschbefestigung auf einfache Weise an den in die Radnabe einschraubbaren Bolzen, zusätzlich die Bremsscheibe befestigbar.

Ferner bezieht sich die Erfindung auf eine Radnabe mit einem mit ihr im Bereich der Flanschbefestigung als gesondertes Bauteil, vorzugsweise als Gussteil, ausgebildeten Radnabenflansch, wie er zuvor beschrieben wurde. In einer weiteren Ausführungsform, in welcher die Flanschbefestigung nicht als besondere Befestigungseinrichtung, d. h. der Radflansch nicht als besonderes Bauteil, sondern einteilige mit der Radnabe verbunden ist, bieten die Belüftungsdurchlässe während der Erstellung der Guss-Sandform zusätzlich gusstechnisch den Vorteil, dass der mit sehr hoher Geschwindigkeit eingeblasene Formsand durch diese Durchlässe hindurchschießen kann, um die Form für die bspw. im Verbundguss noch aufzugießende Bremsscheibe herzustellen. Die vorgegossene Radnabe wird dazu in die zweite Form mit eingelegt. Denselben gusstechnischen Vorteil bieten dann auch die ggf. zusätzlichen Löcher oder Unterbrechungen im Flanschrand.

In einer bevorzugten Ausführungsform ist eine Bremsscheibe, bspw. als Verbundgussteil, einteilig mit der Radnabe und axial beabstandet zu dem Radnabenflansch, ausgebildet.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: einen Querschitt durch die obere Hälfte eines erfindungsgemäßen an einer Radnabe montierten Radnabenflansches, an welchem ein Rad befestigt ist;
- Fig. 2: einen Querschnitt durch die obere Hälfte einer erfindungsgemäßen Radnabe gemäß einer anderen Ausgestaltung;
- Fig. 3: die obere Hälfte der erfindungsgemäßen Radnabe gemäß Fig. 2 in einer Ansicht von vorne;
- Fig. 4: einen Querschnitt durch erfindungsgemäßen Verbindungsstege bei einer Radnabe gemäß Fig. 2;
- Fig. 5: einen Querschnitt entsprechend Fig. 4 durch eine weitere Ausführungsform der Verbindungsstege;
- Fig. 6: eine weitere Ausführungsform eines erfindungsgemäßen Radnabenflansches in einer Teilansicht von vorne;
- Fig. 7: einen Schnitt des erfindungsgemäßen Radnabenflansches entsprechend der Schnittlinie S - S gemäß Fig. 6, und
- Fig. 8: einen Schnitt ähnlich dem von Fig. 7 eines erfindungsgemäßen Radnabenflansches gemäß einer weiteren Ausführungsform.

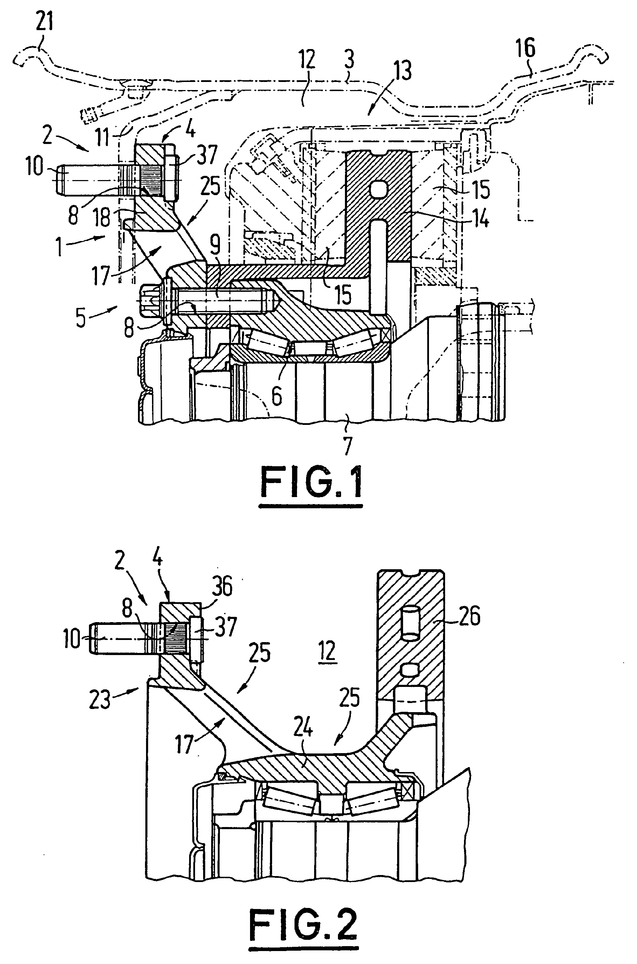

Der in Fig. 1 dargestellte erfindungsgemäße Radnabenflansch 1 weist eine Radbefestigung 2 zum Anschluss eines eine Radfelge 3 und eine Radschüssel 11 aufweisenden Rades an dem äußeren Flanschrand 4 und eine Flanschbefestigung 5 zum Anschluss des Radnabenflansches an eine Radnabe 6 auf. Der Radnabenflansch 1 hat einen größeren Durchmesser als die Radnabe 6, die jeweils auf dem äußeren Ende eines Achskörpers 7 sitzt.

In der Flanschbefestigung 5 des Radnabenflansches 1 sind im Bereich des inneren Flanschrandes Durchgangsöffnungen 8 vorgesehen, durch die Bolzen 9 hindurchgeführt werden können.

Im Bereich der gegenüber der Flanschbefestigung 5 axial nach außen versetzten Radbefestigung 2 sind in dem Radnabenflansch 1 ebenfalls Durchgangsöffnungen 8 vorgesehen, durch die Radbolzen 10 zur Befestigung der die RadRadfelge 3 tragenden Radschüssel 11 hindurchgeführt werden können.

Die Radfelge 3 erstreckt sich im Abstand im Wesentlichen parallel zu dem Achskörper 7, so dass zwischen der Radnabe 6 und der Radfelge 3 ein Zwischenraum 12 gebildet ist, in dem der Bremssattel 13 mit einer Bremsscheibe 14 und zwei seitlich an dieser angreifenden Bremsklötze 15 angeordnet ist. Insbesondere am inneren Radfelgenhorn 16 ist der Zwischenraum 12 zwischen der Radfelge 3 und dem Bremssattel 13 nur sehr gering, so dass sich die beim Bremsen entstehende Wärme in dem Zwischenraum 12 staut.

Zur Abfuhr der in dem Zwischenraum 12 gestauten heißen Luft und damit zur Kühlung der Bremse sind in dem schrägen Teil 18 des Radnabenflansches 1 erfindungsgemäß Belüftungsdurchlässe 17 zwischen der Radbefestigung 2 und der Flanschbefestigung 5 vorgesehen, durch die Luft zur Kühlung der Bremsscheibe 14 13 in den Zwischenraum 12 einströmt. Die Belüftungsdurchlässe 17 sind so angeordnet, dass die zur Kühlung einströmende Luft an der gesamten Bremsscheibe 14 vorbeistreicht und durch den schmaler werdenden Teil des Zwischenraums 12 zwischen dem inneren Radfelgenhorn 16 und der Bremsscheibe 14 abgeführt wird. Damit wird eine besonders effektive Kühlung erreicht, da durch die Belüftungsdurchlässe 17 ständig frische Luft zugeführt wird. Auf diese Weise lässt sich trotz des geringen zur Verfügung stehenden Platzes in dem Zwischenraum 12 eine zuverlässige Kühlung der Bremse gewährleisten. Aufgrund des Luftstromes wird auch das innere Radfelgenhorn 16 ausreichend gekühlt, so dass dort keine Gefahr einer Schädigung der Reifen im Wulstbereich aufgrund zu hoher Radfelgenhorntemperaturen besteht.

Bei der in Fig. 2 gezeigten nach der Erfindung ausgestalteten Radnabe 22 ist der Radnabenflansch 23 mit dem Radanschluss 2 im Bereich der Flanschbefestigung einteilig mit dem Radnabenkörper 24 der Radnabe 22 ausgebildet. Die Flanschbefestigung besteht in dieser Ausführung aus der einteiligen Verbindung des Radnabenflansches 23 mit dem Radnabenkörper 24, vorzugsweise in Form eines Gussteils. Die Belüftungsdurchlässe 17 sind in einem schrägen Verbindungsabschnitt 25 zwischen der axial nach außen vorstehenden Radbefestigung 2 und dem Radnabenkörper 24 angeordnet. Auf der dem Radnabenflansch 23 gegenüberliegenden Seite des Radnabenkörpers 24 ist eine Bremsscheibe 26 einer Scheibenbremse ausgebildet. Im Gegensatz zu dem zuvor beschriebenen Ausführungsbeispiel, bei welchem die Bremsscheibe 14 in der Flanschbesfestigung 5 der an der äußeren Stirnseite der Radnabe 6 befestigt ist, sitzt die Bremsscheibe 26 fest, bspw. durch ein Verbundgussverfahren, auf dem inneren Ende des Radnabenkörpers 24. Dazu wird z. B. die vorgegossene Nabe 22 mit dem einteilig mit dem Nabenkörper 24 ausgebildeten Radnabenflansch 23 in eine zweite Gussform eingelegt. Um diese zweite Gussform herzustellen, wird Formsand mit hoher Geschwindigkeit um die bereits vorgegossene Radnabe 22 eingeschossen. Hierbei haben die Belüftungsdurchlässe 17 zusätzlich den Vorteil, dass der mit hoher Geschwindigkeit eingeblasene Formsand durch sie hindurchschießen kann, so dass sich der Formsand optimal verteilt und keine Hohlräume beim Ausbilden der Form entstehen.

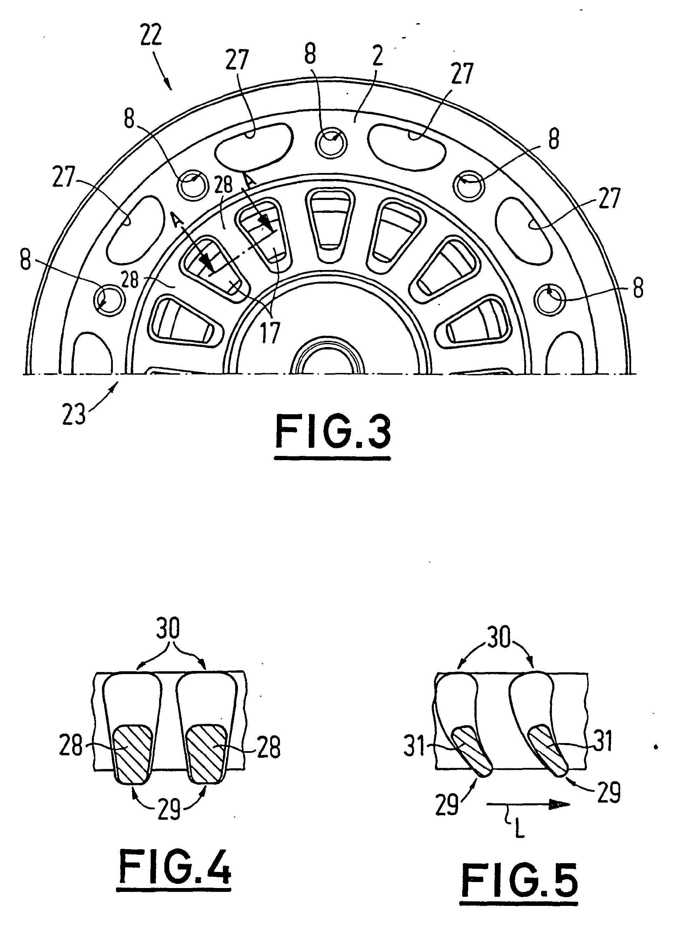

Dem gleichen Zweck dienen die gemäß Fig. 3 zwischen den für die Aufnahme von Radbolzen 10 bestimmten Durchgangsöffnungen 8 der Radbefestigung 2 sich in Umfangsrichtung erstreckende Langlöcher 27, durch welche der Formsand ebenso hindurchgeblasen und die Herstellung der zweiten Gussform erleichtert werden kann. Zusätzlich tragen die weiteren Langlöcher 27 zu einer weiteren Gewichtsersparnis bei.

Die Belüftungsdurchlässe 17 in dem Radnabenflansch 23 sind ebenso wie die Durchgangsöffnungen 8 mit den dazwischen liegenden Langlöchern 27 auf je einem Teilkreis des Radnabenflansches 23 gleichmäßig verteilt angeordnet, so dass zwischen den einzelnen Belüftungsdurchlässen 17 jeweils nur Verbindungsstege 28 verbleiben, die dem Radnabenflansch 23 ein ansprechendes äußeres Design verleihen.

In Fig. 4 sind zwei benachbarte Verbindungsstege 28 entlang dem Schnitt A-A aus Fig. 4 gezeigt. Diese weisen einen im Wesentlichen rechteckigen Querschnitt mit abgerundeten Kanten auf, wobei die äußere Stirnseite 29 schmäler ist als die innere Stirnseite 30. Andere Querschnittsformen, wie z. B. ovale, sind ebenfalls einsetzbar.

Die in Fig. 5 als Variante ausgebildeten Verbindungsstege 31 sind bogenförmig geformt und an ihrer äußeren Stirnseite 29 in Laufrichtung L des Rades schräg nach vorne gewendet. Mit einer derartigen Anordnung lässt sich ein ausgeprägter Ventilatoreffekt erzeugen, der die Kühlwirkung der in den Zwischenraum 12 einströmenden Luft weiter verstärkt. Die hier dargestellten Ausführungsformen der Verbindungsstege 28, 31 können auch bei der erfindungsgemäßen Lösung gemäß Fig. 1 oder den nachfolgend beschriebenen Ausführungsformen angewendet werden.

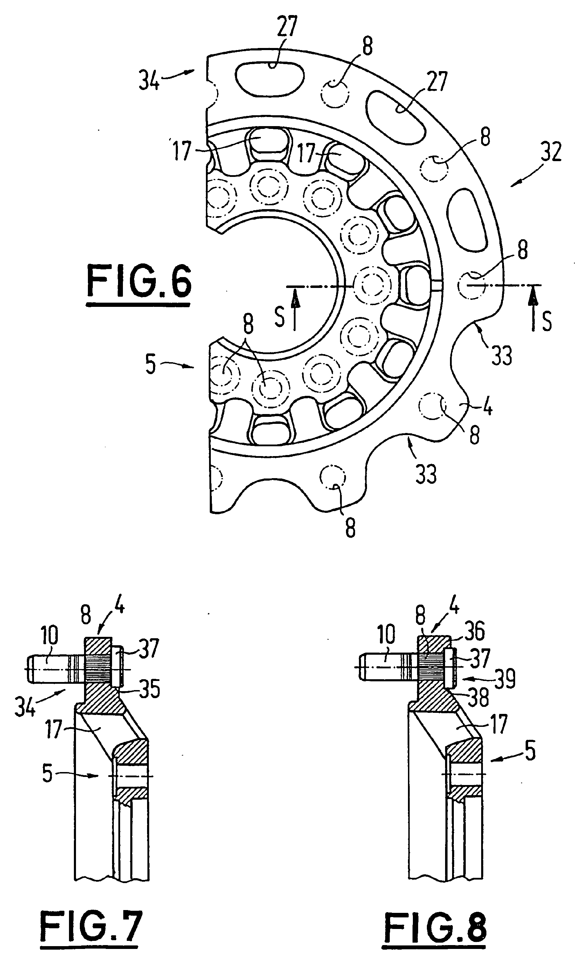

Fig. 6 zeigt zwei weitere Ausgestaltungen eines erfindungsgemäßen Radnabenflansches 32, bei dem die Belüftungsdurchlässe 17 als im Wesentlichen quer zur Radialrichtung des Radnabenflansches 32 angeordnete Langlöcher ausgebildet sind.

Im Bereich der Radbefestigung 34 sind in Fig. 6 zwei mögliche Varianten gezeigt. Neben Langlöchern 27, die zwischen den Durchgangsöffnungen 8 für die Radbolzen 10 angeordnet sind, (vgl. obere Hälfte der Darstellung von Fig. 6) können zwischen den Durchgangsöffnungen 8 auch als Einbuchtungen gestaltete Unterbrechungen 33 im Flanschrand 4 ausgebildet sein, durch welche ebenfalls Formsand zum Ausbilden der Gussform eingeführt werden kann (vgl. untere Hälfte der Darstellung von Fig. 6).

In den Fig. 7 und 8 sind zwei Ausführungsformen für die Anordnung der Radbolzen 10 in dem Radnabenflansch 32 dargestellt. Bei der Radbefestigung 34 gemäß Fig. 7 liegt der Radbolzen 10 mit seinem Bolzenkopf 37 zur Verdrehsicherung mit einer Abflachung an einem radial inneren Vorsprung 35 an.

Bei der in Fig. 8 dargestellten besonders vorteilhaften Ausführungsform stützt sich der Bolzenkopf 37 des Radbolzens 10 zur Verdrehsicherung mit einer Abflachung an einem radial äußeren Kragen 36 des äußeren Flanschrandes 4 ab. Die Verbreiterung des Flanschrandes 4 versteift den Radnabenflansch 32 zusätzlich. An dem dem Kragen 36 gegenüberliegenden Umfangsbereich des Durchgangsöffnung 8 ist eine Abschrägung 38 des Radnabenflansches 1 möglich. Diese Ecke wäre, falls sie als scharfkantige Ecke ausgebildet ist, hinsichtlich der Betriebsfestigkeit problematisch, da aufgrund der Belastung während des Radlaufes an ihr häufig Risse auftreten. Dies wird mit der in Fig. 8 gezeigten Radbefestigung 39 vermieden.

Mit den in den Radnabenflanschen 1, 23, 32 vorgesehenen Belüftungsdurchlässen 17 ist es gelungen, bei einem identischen Radanschluss 2, 34, 38 für 19,5- und 22,5-Zoll-Räder eine effektive Kühlung der unter der Radfelge 3 angeordneten Bremse 13, 14, 15 zu erreichen und eine hohe Stabilität der Radnabenflansche 1, 23, 32 zu bewahren.

### Bezugszeichenliste

- 1: Radnabenflansch
- 2: Radbefestigung
- 3: RadRadfelge
- 4: Flanschrand
- 5: Flanschbefestigung
- 6: Radnabe
- 7: Achskörper
- 8: Durchgangsöffnung
- 9: Bolzen
- 10: Radbolzen
- 11: Radschüssel
- 12: Zwischenraum
- 13: Bremssattel
- 14: Bremsscheibe
- 15: Bremsklotz
- 16: inneres Radfelgenhorn
- 17: Belüfungsdurchlässe
- 18: schräger Teil

- 21: äußeres Radfelgenhorn
- 22: Radnabe
- 23: Radnabenflansch
- 24: Radnabenkörper
- 25: Verbindungsabschnitt
- 26: Bremsscheibe
- 27: Langlöcher
- 28: Verbindungsstege
- 29: äußere Stirnseite
- 30: innere Stirnseite
- 31: Verbindungsstege
- 32: Radnabenflansch
- 33: Unterbrechungen
- 34: Radbefestigung

- 35: Vorsprung
- 36: Kragen
- 37: Bolzenkopf
- 38: Abschrägung
- 39: Radbefestigung

- L: Laufrichtung des Rades

## Patentansprüche

1. Radnabenflansch mit einer Radbefestigung (2, 34, 39) zum Anschluss eines eine Radfelge (3) und eine Radschüssel (11) aufweisenden Rades im Bereich des äußeren Flanschrandes (4) und mit einer Flanschbefestigung (5) zum Anschluss an eine Radnabe (6, 22), **dadurch gekennzeichnet, dass** zwischen der Radbefestigung (2, 34, 39) und der Flanschbefestigung (5) wenigstens zwölf Belüftungsdurchlässe (17) ausgebildet sind.

2. Radnabenflansch nach Anspruch 1, **dadurch gekennzeichnet, dass** zwischen den Belüftungsdurchlässen (17) speichenförmige Verbindungsstege (28, 31) verbleiben.

3. Radnabenflansch nach Anspruch 2, **dadurch gekennzeichnet, dass** die Verbindungsstege (31) schräg und/oder bogenförmig ausgebildet sind.

4. Radnabenflansch nach Anspruch 3, **dadurch gekennzeichnet, dass** die Verbindungsstege (31) an ihrem äußeren Rand schräg in Laufrichtung (L) des Rades weisen.

5. Radnabenflansch nach Anspruch 1, **dadurch gekennzeichnet, dass** die Belüftungsdurchlässe (17) als radiale oder in Umfangsrichtung des äußeren Flanschrandes (4) liegende Langlöcher oder dgl. Öffnungen ausgebildet sind.

6. Radnabenflansch nach einem der vorhergehenden Ansprüche, **dadurch gekennzeichnet, dass** die Belüftungsdurchlässe (17) gleichmäßig über die Oberfläche des Radnabenflansches (1, 23, 32) verteilt sind, bspw. auf einem oder mehreren Teilkreisen.

7. Radnabenflansch nach einem der vorhergehenden Ansprüche, **dadurch gekennzeichnet, dass** die Radbefestigung (2, 34, 39) und die Flanschbefestigung (5) in verschiedenen axial zueinander versetzten Ebenen angeordnet und über einen schrägen Verbindungsabschnitt (25) miteinander verbunden sind und dass die Belüftungsdurchlässe (17) in dem Verbindungsabschnitt (25) ausgebildet sind.

8. Radnabenflansch nach einem der vorhergehenden Ansprüche, **dadurch gekennzeichnet, dass** in dem äußeren Flanschrand (4) im Bereich der Radbefestigung (2, 34, 39) Belüftungslöcher, bspw. radial angeordnete Langlöcher (27), oder Unterbrechungen (33) ausgebildet sind.

9. Radnabenflansch nach einem der vorhergehenden Ansprüche, **dadurch gekennzeichnet, dass** die Radbefestigung (2, 34, 39) Durchgangsöffnungen (8) aufweist, durch welche Radbolzen (10) hindurchführbar sind.

10. Radnabenflansch nach Anspruch 9, **dadurch gekennzeichnet, dass** der Bolzenkopf (37) des Radbolzens (10) zur Drehsicherung eine einseitige Abflachung aufweist, welche sich an einem den Flanschrand (4) verbreiternden Kragen (36) abstützt.

11. Radnabenflansch nach Anspruch 9 oder 10, **dadurch gekennzeichnet, dass** die Durchgangsöffnungen (8) für die Radbolzen (10) einen sich zumindest zu einer Seite hin weisenden abgerundeten oder abgeschrägten (38) Rand aufweisen.

12. Radnabenflansch nach einem der vorhergehenden Ansprüche, **dadurch gekennzeichnet, dass** mit der Flanschbefestigung (5) zusätzlich eine Bremsscheibe (14) befestigbar ist.

13. Radnabe, **gekennzeichnet durch** einen als gesondertes Bauteil, vorzugsweise als Gussteil ausgebildeten Radnabenflansch (1, 23, 32) gemäß einem der Ansprüche 1 bis 12.

14. Radnabe nach Anspruch 13, **dadurch gekennzeichnet, dass** eine Bremsscheibe (26), bspw. als Verbundgussteil, einteilig mit und axial beabstandet zu dem Radnabenflansch (23) ausgebildet ist.

## Claims

1. A wheel hub flange with wheel mounting means (2, 34, 39) for the attachment of a wheel comprising wheel rim (3) and wheel disc (11) in the region of the outer edge (4) of the flange, and with flange mounting means (5) for attachment to a wheel hub (6, 22), **characterized in that** at least twelve ventilation ducts (17) are formed between the wheel mounting means (2, 34, 39) and the flange mounting means (5).

2. A wheel hub flange according to Claim 1, **characterized in that** spoke-like connecting webs (28, 31) remain between the ventilation ducts (17).

3. A wheel hub flange according to Claim 2, **characterized in that** the connecting webs (31) extend at an angle and/or are curved in form.

4. A wheel hub flange according to Claim 3, **characterized in that**, at their outer edges, the connecting webs (31) are angled in direction of travel (L) of the wheel.

5. A wheel hub flange according to Claim 1, **characterized in that** the ventilation ducts (17) are formed as radial slots or slots arranged in circumferential direction of the outer edge (4) of the flange or as similar apertures.

6. A wheel hub flange according to one of the preceding claims, **characterized in that** the ventilation ducts (17) are evenly distributed over the surface of the wheel hub flange (1, 23, 32), for example over one or more pitch circles.

7. A wheel hub flange according to one of the preceding claims, **characterized in that** the wheel mounting means (2, 34, 39) and the flange mounting means (5) are disposed in different planes which are axially offset relative to one another, said wheel mounting means (2, 34, 39) and flange mounting means (5) being joined together by a diagonal connecting portion (25), and **in that** the ventilation ducts (17) are formed in said connecting portion (25).

8. A wheel hub flange according to one of the preceding claims, **characterized in that**, in the outer edge (4) of the flange, ventilation holes, for example radial slots (27) or recesses (33), are formed in the region of the wheel mounting means (2, 34, 39).

9. A wheel hub flange according to one of the preceding claims, **characterized in that** the wheel mounting means (2, 34, 39) comprises through openings (8) for the insertion of wheel studs (10).

10. A wheel hub flange according to Claim 9, **characterized in that** the head (37) of the wheel stud (10) has a flattened portion on one side to prevent it from being turned, said flattened portion being supported against a collar (36) that widens the edge (4) of the flange.

11. A wheel hub flange according to Claim 9 or 10, **characterized in that**, at least towards one side, the through openings (8) for the wheel studs (10) have a rounded or bevelled edge (38).

12. A wheel hub flange according to one of the preceding claims, **characterized in that** a brake disc (14) can additionally be mounted via the flange mounting means (5).

13. A wheel hub **characterized by** a wheel hub flange (1, 23, 32) according to one of Claims 1 to 12 which is formed as a separate component, preferably as a casting.

14. A wheel hub according to Claim 13, **characterized in that** a brake disc (26) is formed, as a composite casting for example, so as to be in one piece with the wheel hub flange (23) and at an axial distance therefrom.

## Revendications

1. Flasque de moyeu de roue comportant une fixation de roue (2, 34, 39) permettant de fixer une roue présentant une jante (3) et un voile (11) dans la zone du bord externe du flasque (4), et une fixation de flasque (5) permettant la fixation sur un moyeu (6, 22), **caractérisée en ce que**, entre la fixation de roue (2, 34, 39) et la fixation de flasque (5), sont formés au moins douze passages d'aération (17).

2. Flasque de moyeu de roue selon la revendication 1, **caractérisé en ce que**, entre les passages d'aération (17), se trouvent des barres de raccordement (28, 31) en forme de rayons.

3. Flasque de moyeu de roue selon la revendication 2, **caractérisé en ce que** les barres de raccordement (31) sont de forme oblique et/ou en arc.

4. Flasque de moyeu de roue selon la revendication 3, **caractérisé en ce que** les barres de raccordement (31) sont orientées, au niveau de leur bord externe, de manière oblique par rapport au sens de rotation (L) de la roue.

5. Flasque de moyeu de roue selon la revendication 1, **caractérisé en ce que** les passages d'aération (17) sont configurés sous la forme de trous longiformes radiaux ou s'étendant dans la direction périphérique du bord externe de flasque (4), ou d'ouvertures similaires.

6. Flasque de moyeu de roue selon l'une des revendications précédentes, **caractérisé en ce que** les passages d'aération (17) sont répartis de manière régulière sur la surface du flasque de moyeu de roue (1, 23, 32), par exemple sur un ou plusieurs segments de cercle.

7. Flasque de moyeu de roue selon l'une des revendications précédentes, **caractérisé en ce que** la fixation de roue (2, 34, 39) et la fixation de flasque (5) sont disposées dans différents plans décalés entre eux de façon axiale, et sont reliés ensemble par l'intermédiaire d'une section de raccordement (25) oblique, et **en ce que** les passages d'aération (17) sont formés dans la section de raccordement (25).

8. Flasque de moyeu de roue selon l'une des revendications précédentes, **caractérisé en ce que**, dans le bord de flasque externe (4), au niveau de la fixation de roue (2, 34, 39), sont ménagés des trous d'aération, par exemple des trous longiformes (27) disposés radialement, ou des trous (33).

9. Flasque de moyeu de roue selon l'une des revendications précédentes, **caractérisé en ce que** la fixation de roue (2, 34, 39) est munie d'ouvertures de passage (8) au travers desquelles peuvent passer les boulons de roue (10).

10. Flasque de moyeu de roue selon la revendication 9, **caractérisé en ce que**, en vue d'un blocage en rotation, la tête de boulon (37) du boulon de roue (10) présente d'un côté un méplat qui repose sur un collet (36) élargissant le bord de flasque (4).

11. Flasque de moyeu de roue selon la revendication 9 ou 10, **caractérisé en ce que** les ouvertures de passage (8) destinées aux boulons de roue (10) présentent un bord arrondi ou biseauté (38) orienté au moins vers un côté.

12. Flasque de moyeu de roue selon l'une des revendications précédentes, **caractérisé en ce qu'**au moins un disque de frein (14) peut être fixé en outre à l'aide de la fixation de flasque (5).

13. Moyeu de roue, **caractérisé par** un flasque de moyeu de roue (1, 23, 32) selon l'une de revendications 1 à 12 configuré sous la forme d'un composant séparé, de préférence sous la forme d'une pièce moulée.

14. Moyeu de roue selon la revendication 13, **caractérisé en ce qu'**un disque de frein (26), par exemple sous la forme d'une pièce moulée composite, est formé d'un seul tenant avec le flasque de moyeu de roue (23) et en en étant espacé axialement.
